Europäisches Patentamt

European Patent Office

Office européen des brevets

(19)

(11) Publication number: **0 186 014 B1**

# EUROPEAN PATENT SPECIFICATION

(12)

(45) Date of publication of patent specification: **27.02.91**   (51) Int. Cl.⁵: **G01N 29/00**

(21) Application number: **85115563.0**

(22) Date of filing: **06.12.85**

(54) **Apparatus for adjustably mounting ultrasonic testing devices.**

(30) Priority: **27.12.84 US 686806**

(43) Date of publication of application:
**02.07.86 Bulletin 86/27**

(45) Publication of the grant of the patent:
**27.02.91 Bulletin 91/09**

(84) Designated Contracting States:
**BE DE FR GB IT SE**

(56) References cited:
**DE-A- 2 643 126**
**DE-A- 3 227 130**
**FR-A- 2 088 972**
**US-A- 3 077 768**
**US-A- 3 898 838**

**NAVY TECHNICAL DISCLOSURE BULLETIN,
vol. 9, no. 1, September 1983, pages 11-15,
Washington, US; J. MITTLEMAN "Ultrasonic
shear wave inspection device"**

(73) Proprietor: **WESTINGHOUSE ELECTRIC COR-
PORATION**
**Westinghouse Building Gateway Center
Pittsburgh Pennsylvania 15222(US)**

(72) Inventor: **Rohrer, Edwin Harrold**
**1500 East Calla Road**
**Poland Ohio 44514(US)**

(74) Representative: **Patentanwälte Dipl.-Ing. R.
Holzer Dipl.-Ing. (FH) W. Gallo**
**Ludwigstrasse 26**
**D-8900 Augsburg(DE)**

## Description

This invention relates to an apparatus for ultrasonically inspecting a predetermined area on an object, such as a weld on a rod to be used in a nuclear fuel assembly, and it relates in particular to an apparatus for adjustably mounting ultrasonic testing devices.

Apparatus employing transducers for testing or inspecting the integrity of structural material are known generally. Thus, U.S. patent specification No. 3,056,286 describes apparatus for inspecting elongate seam welds progressively formed in work moving along a production line. In U.S. patent specification No. 3,063,290 there is described a system for ultrasonically inspecting tubular objects, such as a pipe rotated on its longitudinal axis while a transducer positioned on a dolly is moved parallel therealong. U.S. patent specification No. 3,224,254 discloses an apparatus for ultrasonically inspecting elongate members moved past stationary transducers, and U.S. patent specification No. 3,678,735 describes an installation for ultrasonically testing metal cans wherein emitter-receiver transducers are mounted on the side walls of a vessel and focused upon the axis of each metal can being fed through the device, the transducers being manually adjustable to change their focal distance relative to the cans. Furthermore, there is U.S. patent specification No. 3,829,609 which describes an ultrasonic testing system for testing elongate work pieces, such as tubing, as they are being moved at high speed past a plurality of ultrasonic transducers positioned along the path of travel of the tubing, the transducers being supported on individual, manually adjustable devices for moving them in paths parallel to the tubing and circumferentially about an axis spaced therefrom. U.S. patent specification No. 4,099,418 discloses a system for determining tube eccentricity by means of ultrasonic sensors mounted on movable sensing heads on guide means.

Finally, DE-A-26 43 126 discloses an ultrasonic inspection apparatus comprising the features of the pre-characterizing portion of claim 1, i.e. a positioning slide assembly for adjusting a support member along three axis perpendicular to one another, with the support member supporting a transducer mounting and angulating assembly including a transducer carrier adapted to have an ultrasonic transducer mounted thereon and to be angularly movable with regard to the support member.

When it is desired to inspect a predetermined area on an object from various angles, this prior art apparatus, while allowing to adjust the ultrasonic transducer to any desired position through respective adjustments of the positioning slide assembly in along said three axes combination with appropriate angulating the transducer carrier with regard to said support member, this is a highly sophisticated affair requiring refocusing the transducer with regard to said predetermined object area every time the position of the transducer is changed.

The present invention has for its principal object to provide a relatively compact apparatus capable of aiming ultrasonic testing devices, such as transducers, at a predetermined test area from various angles without refocusing every time the angular position is changed.

In accordance with the present invention, this object is achieved by the apparatus as characterized in claim 1.

Preferred constructional details of the apparatus according to the invention are characterized in subclaims 2 to 9.

Since movement of the transducer carrier and, consequently, of the transducer mounted thereon is along a path centered on the focal point of the transducer, the angular position of the transducer with respect to the area to be inspected can be changed at will without requiring the transducer to be refocused upon each positional change thereof. This permits testing to be performed expeditiously and is of particular advantage where ultrasonic testing is done in a liquid medium, as usually it is. The adjusting means for the transducer carrier, preferably a rotatable manipulating shaft extending through the elongate support member formed as a tube, lends itself to operation by remote control, the transducer carrier preferably comprising a gear segment geared to the shaft.

The apparatus embodying the invention is compact enough to allow several such apparatus to be combined at a testing station, such as atop a test tank containing an ultrasound transmitting liquid in which the object with the area to be inspected is immersed together with the transducer mounting and angulating assemblies of the respective apparatus, the transducers on said assemblies being positioned for optimum "viewing" of the test area.

The apparatus according to the invention is particularly suitable for use in inspecting and testing end welds on rod-like elements, such as fuel rods, utilized in nuclear fuel assemblies. For this purpose, the test tank preferably has a collet disposed in a side wall thereof, through which collet the rod to be tested can be inserted and extended into the tank for ultrasonic testing. The collet preferably is rotatable, enabling the rod to be revolved about its longitudinal axis as the weld area thereon is being inspected.

A preferred embodiment of the invention will now be described, by way of example only, with reference to the accompanying drawings, in which:-

Figure 1 is a vertical sectional view of an apparatus embodying the invention;

Fig. 2 is an enlarged top plan view, with parts broken away for clarity, of a transducer mounting and angulating assembly forming part of the apparatus shown in Fig. 1;

Fig. 3 is a side elevational view of the assembly shown in Figure 2, together with an ultrasonic testing device shown in phantom;

Fig. 4 is a horizontal sectional view taken along line 4-4, of Fig. 3, and with parts shown broken away for clarity;

Fig. 5 is a horizontal sectional view of two transducer mounting and angulating assemblies positioned on opposite sides of a rod having an end weld to be inspected; and

Fig. 6 is a diagrammatic illustration of a plurality of ultrasonic testing devices positioned relative to a rod end weld to be inspected.

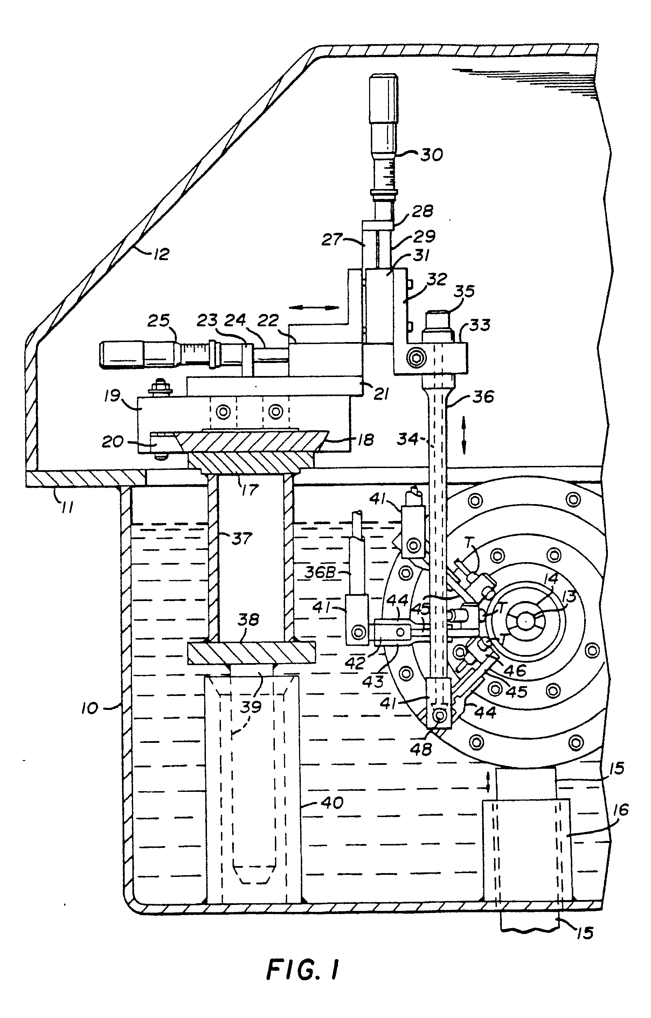

Referring now to the drawings and to Fig. 1 in particular, the apparatus illustrated therein includes a tank 10 which has a flat peripheral flange 11 around its open top, a movable transparent plastic cover 12 over its top, and a movable collet 14 extending through a side wall of the tank and having a suitable gland (not shown) placed therearound to provide a liquid seal preventing undesirable leakage of water from the tank. The collet 14 defines an aperture 13 for receiving a rod to be inspected for axial movement of the latter inwards of the tank 10 until stopped in a proper axial position for testing an end weld on the rod. The axial test position of the rod is defined by a movable stop 15 which extends through an opening in the bottom of the tank 10 and through a guide sleeve 16 secured to the tank bottom in alignment with the opening therein, and which stop 15 is axially movable to and from its effective position by suitable means (not shown) disposed outside the tank.

An elongate support member 17 attached to, and extending inwardly from, the peripheral flange 11 carries a dove-tailed pad 18 supporting a slide 19 for movement of the latter along a horizontal axis perpendicular to the plane of the paper of the drawing, the slide 19 being guided in its movement through engagement of the dove-tailed pad 18 with a similarly shaped recess defined in the bottom of the slide 19 and partially by a guide and retaining block 20 removably secured to the slide 19. Mounted on the upper surface of the slide 19 is a guide pad 21 having formed therein a dove-tailed groove in which a dove-tailed slide 22 is for sliding movement thereof along a horizontal axis perpendicular to the first-mentioned axis. An upstanding boss 23 on the plate 21 rotatably supports a shaft 24 which has a micrometer head 25 on one end portion thereof and has an opposite end portion thereof rotatably caged in the slide 22. The slide 22 has an L-shaped part 26, in one vertical surface of which there is formed a dove-tailed groove having a slide 31 slidably engaged therewith for movement of the slide along a vertical axis. An upward extension 27 on the slide 22 has boss 28 which rotatably supports a shaft 29 having a micrometer head 30 on one end thereof and having an opposite end portion thereof engaged with the slide 31 such as to cause the latter to move vertically upon rotation of the micrometer head 30. The slide 31 has secured thereto an L-shaped block 32 with a horizontal portion 33 which rotatably supports a manipulating shaft 34 having a head 35 on its upper end, and which supports further a support tube 36 secured at its upper end to the portion 33 of the L-shaped block 32 and having the manipulating shaft 34 extending therethrough. Summing up, it will be appreciated from the foregoing that the manipulating shaft 34 and the support tube 36 are movable as follows relative to a rod inserted through the collet 14 for inspection: along a horizontal axis parallel to the longitudinal axis of the rod, upon operation of the slide 19; along a horizontal axis perpendicular to the longitudinal axis of the rod, upon operation of the slide 22 as effected through rotation of the micrometer head 25; and along a vertical axis perpendicular to the longitudinal axis of the rod, upon operation of the slide 31 as effected through rotation of the micrometer head 30.

Typically, the apparatus embodying the invention may employ several assemblies such as the one described above, each of them for imparting three-dimensional motion to an additional shaft-and-support-tube combination such as indicated at 36A and 36B in Fig. 1. Thus, there may be altogether six such assemblies and shaft-and-support-tube combinations for adjustably supporting six transducers positioned radially around an axis corresponding to the longitudinal axis of a rod inserted through the collet 14.

It will be appreciated that still an additional apparatus, similar to the one shown in Fig. 1, could be employed for adjustably supporting an additional ultrasonic testing device positioned direct above the end weld of the rod to be inspected, as indicated in broken lines in Fig. 6. Such additional apparatus would be supported from a member, such as member 17, attached to the peripheral flange 11 at the side of the tank 10 located opposite to the tank wall having the collet 14 disposed thereon.

As seen from Fig. 1, the inwardly extending member 17 has a tubular member 37 extending from its lower surface, and a guide pin 39 depending from a bottom portion 38 of the tubular member 37 extends axially into an upright cylindrical guide 40 on the bottom of the test tank 10. Preferably, two such guide assemblies 37-40 are provided for all slide assemblies, such as assembly 18-33, employed with the apparatus.

The letter T in Fig. 1 designates transducers supported and positioned by means of the apparatus embodying the invention. Each transducer serves as a transmitter including a piezoelectric crystal (lithium sulphate, quartz, etc.) which converts electrical shock energy into mechanical vibrations at ultrasonic frequency, the transmitting time being in the order of one microsecond and with a much longer interval for listening. When the transducers are properly positioned with respect to the end weld of a fuel rod under inspection, the waves emitted therefrom will strike the weld area. When a sound wave from the transducer initially impinges upon the weld area, a portion of the sound wave is reflected from the weld area back to the transducer and the echo is displayed on an oscilloscope. If there is no flaw in the weld area, there will be no other reflection therefrom. However, if there is a flow in the weld area, the wave upon reaching the interface of the flow is reflected back to the transducer which in turn transmits the flaw indicating signal to the oscilloscope.

Ultrasonic testing preferably is performed while the rod having the weld area being tested is slowly rotated about its longitudinal axis. For this purpose, the collet 14 in the tank wall may have associated therewith suitable means (not shown) for slowly rotating the collet 14 together with the rod received therein. Such rotation may be started responsive to the rod being positioned through the collet 14 and engaged with the vertically movable rod stop 15, which engagement in turn may be to actuate the suitable means (not shown) for rotating the rod and for retracting or lowering the rod stop 15 to a position below the rod and its weld area to be inspected.

Likewise as seen from Fig. 1, each support tube 36 has at its lower end a mounting body 41 which pivotally supports a gear housing 42 including a pair of upper and lower plates 43 and 44 which, in turn, support a quasi-triangular gear segment 45 carrying a transducer holder 46 on its outer end.

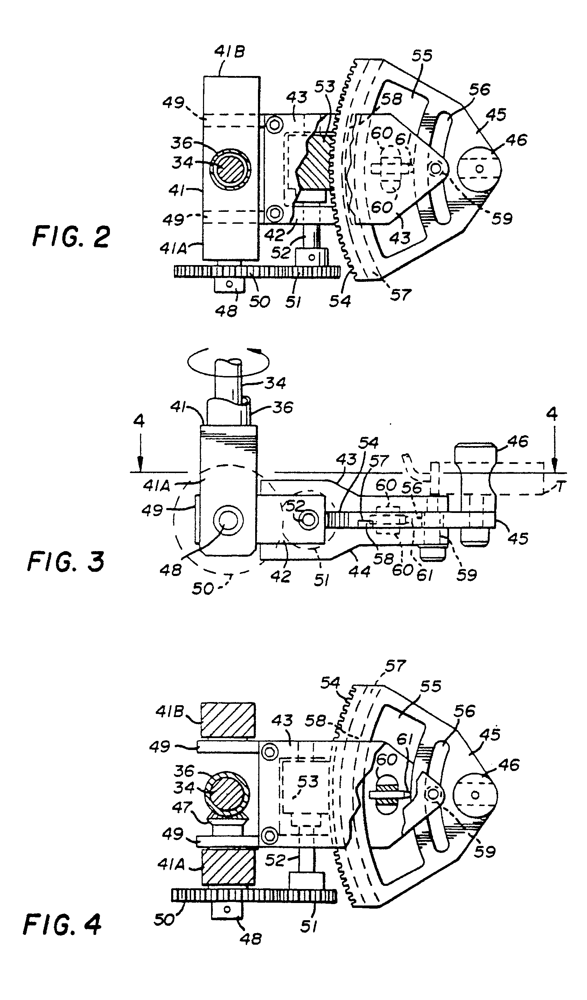

Referring in particular to Figs. 2, 3 and 4, it will be seen therefrom that the mounting body 41 on the lower end of the support tube 36 is shaped substantially as an inverted U having a light portion which is connected to the support tube 36 and has an opening through which extends the manipulating shaft 34 having a bevel gear (not shown) on the end portion thereof which is located between the two parallel spaced leg portions 41A and 41B of the generally U-shaped mounting body 41. The bevel gear on the shaft 34 is in mesh with another bevel gear 47 on a shaft 48 which extends through and is rotatably supported in openings formed respectively in one of two parallel spaced arms or extensions 49 of the gear housing 42 and in the leg portion 41A of the body 41. Likewise secured to the shaft 48, adjacent the opposite end thereof, is a gear 50 which is in mesh with a gear 51 on a shaft 52 rotatably supported in and extending through an aperture in a side wall portion of the housing 42. Disposed in the gear housing 42 and secured to the shaft 52 is a worm gear 53 which is in mesh with the teeth 54 on the arcuate peripheral edge portion of the gear segment 45.

Progressing from its major end bearing the teeth 54 toward its minor end carrying the transducer holder 46, the gear segment 45 has formed therein, in the sequence as stated, an arcuate groove 57, an arcuate recess 55, and an arcuate slot 56. The arcuate set of teeth 54, the groove 57, the recess 55, and the slot 56 are concentric with respect to each other and centered in the focal point of a transducer T (see Fig. 3 or 5) mounted in the transducer holder 46. The groove 57 is formed in the lower side of the gear segment and is in registry with a relatively short arcuate guide rib 58 on the upper surface of the lower plate 44 of the gear housing 42. The arcuate slot 56 is movably engaged with a guide pin 59 secured to and extending between the upper and lower plates 43 and 44 of the gear housing.

It will be appreciated that with the arrangement as described thus far, rotation of the head 35 (see Fig. 1) and, hence, of the shaft 34, e.g. by remote control, will cause the gear segment 45 to be angulated as indicated in Fig. 5, while maintaining the focal point of the transducer T on the peripheral weld area W near the end E of the rod W being inspected. The apparatus thus maintains the critical spacing of the transducer with respect to the weld so as to pick up the maximum frequency response and, hence, to ensure the accuracy of the test.

As seen from Figs. 2, 3 and 4, the upper and lower plates 43 and 44 of the gear housing 42 have recesses 60 formed therein on opposite sides of the arcuate recess 55 of the gear segment 45, which recesses 60 have mounted therein a detent plunger 61 biased, e.g. by means of a spring (not shown), into engagement with suitable detents, e.g. serrations or notches (not shown), on one of the arcuate edges defining the recess 55. The plunger 61, in cooperation with the detents, indexes the gear segment 45 in positions determining the angular disposition of the transducer in the holder 46 of the gear segment 45 with respect to the rod end weld to be inspected.

Referring once more to Fig. 5, there are shown two transducer mounting and angulating assemblies spaced apart along a center line CL and disposed on opposite sides of the rod R shown in broken lines. The assembly to the left of the rod R corresponds to the transducer mounting and angulating assembly just described with particular reference to Figs. 2, 3 and 4, and the assembly to the right is similar thereto except that the gear housing 42 adjustably attached thereto a secondary mounting body 62 which rotatably supports a shaft 63 carrying the worm gear 53 which meshes with the gear segment 54. A bevel gear 64 on the outer end portion of the shaft 63 meshes with a similar bevel gear a lower end portion of a secondary manipulating shaft 65 which extends similar to the support tube 36 of the left-hand assembly but laterally offset from the center line CL extending through the housing 42 and the gear segment 45 with the transducer holder 46 thereon.

In Fig. 5, the center line CL is shown as extending through the rod R at the weld W positioned to be inspected, and lines extending from the weld W above and below the center line at about 35 degrees with respect to the latter indicate positions to which the transducers may be angulated to provide for axial or para-axial shear wave direction.

## Claims

1. Apparatus for carrying and positioning an ultrasonic transducer (T) for ultrasonically inspecting a pre-determined area on an object, comprising a positioning slide assembly (18-33), an elongate support member (36) supported at one end thereof from the positioning slide assembly, and a transducer mounting and angulating assembly (41-61) supported from the support member (36) adjacent the opposite end thereof and including a transducer carrier (45) adapted to have a ultrasonic transducer (T) mounted thereon, said positioning slide assembly including means (19-21, 22-28, 29-33) adjustable to move the support member (36) together with the transducer mounting and angulating assembly (41-61) thereon along three axes perpendicular to one another, thereby to permit a transducer (T) when mounted at said carrier (45) to be positioned in spaced relation with respect to said object and to be focused upon said predetermined area thereon, characterized in that said transducer carrier (45) is mounted to said transducer mounting and angulating assembly (41-61) through a structure (42, 43, 56-59) allowing said transducer carrier (45) to be movable in an arcuate path centered on a distal point corresponding to the focal point of a transducer (T) when mounted on the transducer carrier, and that said transducer carrier (45) has associated therewith adjusting means (34) operatively connected (47, 50, 51, 53) to the transducer carrier and operable to move the latter along said arcuate path without any adjustments of said positioning slide assembly in said three perpendicular axis being made.

2. Apparatus according to claim 1, characterized in that said adjusting means (34) is a rotable manipulating shaft, and said transducer carrier (45) is a gear segment, said transducer mounting and angulating assembly (41-61) including gearing (47-53) interposed between the manipulating shaft and the gear segment for translating rotational movement of the shaft into movement of the gear segment in said arcuate path.

3. Apparatus according to claim 2, characterized in that said support member (36) is a tube having said manipulating shaft (34) extending axially therethrough.

4. Apparatus according to claim 2 or 3, characterized in that said structure mounting said transducer carrier to said transducer mounting and angulating assembly (41-61) includes a pair of parallel spaced plates (43,44) between which the gear segment (45) is supported for movement thereof in a plane parallel to said plates and containing said arcuate path, said plates (43,44) having thereon guide means (56,57) cooperating with guide formations (56,57) on the gear segment (45) to guide the latter during movement thereof in said arcuate path.

5. Apparatus according to claim 4, characterized in that said guide formations (56,57) on the gear segment (45) are an arcuate slot (56) and an arcuate groove (57) both centered on said distal point.

6. Apparatus according to any one of claims 1 to 5, characterized in that said transducer carrier (45) has associated therewith means (61) for indexing the transducer carrier in predetermined angular positions along said arcuate path.

7. Apparatus according to any one of claims 1 to 6, characterized in that it includes a test tank (10) having a collet (14) disposed in a sidewall thereof for receiving a rod-like object (R) axially therethrough, and means (17) for rigidly supporting said positioning slide assembly (18-33) atop the test tank so that said elongate support member (36) extends into the tank.

8. Apparatus according to claim 7, characterized in that said collet (14) is rotatable so as to revolve a received rod-like object (R) about its longitudinal axis.

9. Apparatus according to any one of claims 1 to 8, characterized in that said slide assembly (18-33) includes a first slide (19) supported for movement thereof along a first one of said three axes, a second slide (22) supported on said first slide (19) for adjustment thereon along a second of said three axes extending in a direction perpendicular to the first axis and in a plane parallel thereto, and a third slide (31) supported on said second slide (22) for adjustment thereon along the third axis extending in a direction perpendicular to the parallel planes containing respectively the first and second axes, said elongate support member (36) being supported from said third slide (31).

**Revendications**

1. Appareil pour porter et positionner un transducteur (T) ultrasonore en vue d'inspecter par ultrasons une surface prédéterminée d'un objet, comprenant un ensemble de coulisseaux (18 à 33) de positionnement, un élément (36) de support allongé supporté à l'une de ses extrémités à partir de l'ensemble de coulisseaux de positionnement, et un ensemble (41 à 61) de montage et d'ajustage angulaire de transducteur supporté à partir de l'élément (36) de support au voisinage de l'extrémité opposée de ce dernier et comprenant un support (45) de transducteur sur lequel peut être monté un transducteur (T) ultrasonore, ledit ensemble de coulisseaux de positionnement comportant des moyens (19 à 21, 22 à 28, 29 à 33) ajustables de façon à déplacer l'élément (36) de support en même temps que l'ensemble (41 à 61) de montage et d'ajustage angulaire de transducteur qu'il supporte le long de trois axes perpendiculaires les uns aux autres, afin de permettre à un transducteur (T), une fois monté sur ledit support (45), d'être positionné à une certaine distance dudit objet et d'être focalisé sur ladite surface prédéterminée de ce dernier, caractérisé en ce que le support (45) de transducteur est monté sur ledit ensemble (41 à 61) de montage et d'ajustage angulaire de transducteur par l'intermédiaire d'une structure (42, 43, 56 à 59) permettant audit support (45) de transducteur de se déplacer suivant un trajet en arc centré sur un point distal correspondant au point focal d'un transducteur (T) lorsqu'il est monté sur le support de transducteur, et en ce que ledit support (45) de transducteur comporte des moyens (34) de réglage qui lui sont associés et qui sont reliés (47, 50, 51, 53) fonctionnellement au support de transducteur et aptes à déplacer ce dernier suivant ledit trajet en arc sans qu'aucun réglage dudit ensemble de coulisseaux de positionnement suivant lesdits trois axes perpendiculaires ne soit nécessaire.

2. Appareil selon la revendication 1, caractérisé en ce que lesdits moyens (34) de réglage sont constitués par un arbre de manipulation rotatif, et en ce que ledit support (45) de transducteur est un secteur denté, ledit ensemble (41 à 61) de montage et d'ajustage angulaire de transducteur comprenant un système d'engrenage (47 à 53) intercalé entre l'arbre de manipulation et le secteur denté afin de transformer le mouvement de rotation de l'arbre en un mouvement du secteur denté dans ledit trajet en arc.

3. Appareil selon la revendication 2, caractérisé en ce que ledit élément (36) de support est un tube à travers lequel s'étend axialement ledit arbre (34) de manipulation.

4. Appareil selon la revendication 2 ou la revendication 3, caractérisé en ce que ladite structure servant au montage dudit support de transducteur sur ledit ensemble (41 à 61) de montage et d'ajustage angulaire de transducteur comporte une paire de plaques (43,44) espacées et parallèles entre lesquelles est supporté le secteur denté (45) en vue de son déplacement dans un plan parallèle auxdites plaques et contenant ledit trajet en arc, des moyens (56,57) de guidage prévus sur lesdites plaques (43,44) coopérant avec des éléments de guidage (56,57) formés sur le secteur denté (45) en vue de guider ce dernier pendant son déplacement dans ledit trajet en arc.

5. Appareil selon la revendication 4, caractérisé en ce que lesdits éléments de guidage (56,57) formés sur le secteur denté (45) sont constitués par une fente (56) en arc et une rainure (57) en arc, toutes deux centrées sur ledit point distal.

6. Appareil selon l'une quelconque des revendications 1 à 5, caractérisé en ce que ledit support (45) de transducteur comporte des moyens (61) qui lui sont associés et qui sont destinés à l'indexage du support de transducteur suivant des positions angulaires prédéterminées le long dudit trajet en arc.

7. Appareil selon l'une quelconque des revendications 1 à 6, caractérisé en ce qu'il comprend un réservoir (10) d'essai comportant une pince (14) disposée dans une de ses parois latérales à travers laquelle peut être introduit axialement un objet (R) en forme de barre, et des moyens (17) destinés à supporter de façon rigide ledit ensemble (18 à 33) de coulisseaux de positionnement sur le dessus du réservoir d'essai de façon à ce que ledit élément (36) de support allongé s'étende à l'intérieur du réservoir.

8. Appareil selon la revendication 7, caractérisé en ce que ladite pince (14) est apte à tourner de façon à faire tourner, autour de son axe longitudinal, un objet (R) en forme de barre qui a été introduit.

9. Appareil selon l'une quelconque des revendications 1 à 8, caractérisé en ce que ledit ensemble (18 à 33) de coulisseaux comporte un premier coulisseau (19) supporté en vue de son déplacement le long d'un premier desdits trois axes, un second coulisseau (22) supporté sur ledit premier coulisseau (19) en vue de son réglage le long d'un second desdits trois axes s'étendant dans une direction perpendiculaire au premier axe et dans un plan qui lui est parallèle, et un troisième coulisseau (31) supporté sur ledit second coulisseau (22) en vue de son réglage le long du troisième axe s'étendant dans une direction perpendiculaire aux plans parallèles contenant respectivement les premier et second axes, ledit élément (36) de support allongé étant supporté par ledit troisième coulisseau (31).

**Ansprüche**

1. Vorrichtung zum Tragen und Positionieren eines Ultraschall-Prüfkopfs (T) zur Ultraschallprüfung eines bestimmten Bereichs eines Objekts, wobei die Vorrichtung eine Positionierschlitten-Anordnung (18 - 33), ein an seinem einen Ende von der Positionierschlitten-Anordnung gehaltertes, längliches Halteteil (36) und eine vom Halteteil (36) an dessen anderem Ende gehalterte Vorrichtung (41 bis 61) zur Befestigung und Drehung des Prüfkopfes aufweist, welche zum Anbringen eines Ultraschall-Prüfkopfes (T) einen Prüfkopfträger (45) aufweist, wobei die Positionierschlitten-Anordnung zum Bewegen des Halteteils (36) zusammen mit der daran angeordneten Vorrichtung (41 bis 61) zum Befestigen und Drehen des Prüfkopfs entlang dreier senkrecht aufeinander stehender Achsen justierbare Mittel (19 - 21, 22 - 28, 29 - 33) aufweist und wobei ein am Träger (45) befestigter Prüfkopf (T) mit Abstand zum Objekt positionierbar und auf den bestimmten Bereich des Objekts richtbar ist, dadurch gekennzeichnet, daß der Prüfkopfträger (45) an der Vorrichtung (41 - 61) zum Befestigen und Drehen des Prüfkopfs mittels einer Vorrichtung (42, 43, 56 - 59) befestigt ist, wodurch der Prüfkopfträger (45) entlang eines bogenförmigen Pfades um einen bezüglich des Brennpunkts eines am Prüfkopfträger befestigten Prüfkopfes (T) distalen Punkts bewegbar ist, und daß dem Prüfkopfträger (45) Einstellmittel (34) zugeordnet sind, welche funktionsmäßig mit dem Prüfkopfträger verbunden (47, 50, 51, 53) sind und mit deren Hilfe die bogenförmige Bewegung des Prüfkopfträgers ausführbar ist, und zwar ohne jegliche Verstellungen der Positionierschlitten-Anordnung in den drei senkrecht aufeinanderstehenden Achsen.

2. Vorrichtung nach Anspruch 1, dadurch gekennzeichnet, daß die Einstellmittel (34) ein drehbarer Betätigungsstab sind, und daß der Prüfkopfträger (45) ein Zahnradsegment ist, wobei die Vorrichtung (41 - 61) zum Befestigen und Drehen des Prüfkopfs ein zwischen dem Betätigungsstab und dem Zahnrad segment angeordnetes Getriebe (47 - 53) zum Übersetzen der Drehbewegung des Stabs in die bogenförmige Bewegung des Zahnradsegments aufweist.

3. Vorrichtung nach Anspruch 2, dadurch gekennzeichnet, daß das Halteteil (36) ein Rohr ist, durch welches sich der Betätigungsstab (34) axial erstreckt.

4. Vorrichtung nach einem der Ansprüche 2 oder 3, dadurch gekennzeichnet, daß die den Prüfkopfträger mit der Vorrichtung (41 bis 61) zum Befestigen und Drehen des Prüfkopfs verbindende Vorrichtung zwei parallel mit Abstand angeordnete Platten (43, 44) aufweist, zwischen welchen das Zahnradsegment (45) zu dessen bogenförmiger Bewegung in einer zu den Platten parallelen Ebene gehaltert ist, wobei die Platten (43, 44) Führungsmittel (56, 57) aufweisen, welche in Führungen (56, 57) am Zahnradsegmet (45) eingreifen, um das Zahnradsegment während dessen bogenförmiger Bewegung zu führen.

5. Vorrichtung nach Anspruch 4, dadurch gekennzeichnet, daß die Führungen (56, 57) am Zahnradsegment (45) ein bogenförmiger Schlitz (56) und eine bogenförmige Nut (57) sind, wobei beide Bogenformen den distalen Punkt als Mittelpunkt haben.

6. Vorrichtung nach einem der Ansprüche 1 bis 5, dadurch gekennzeichnet, daß dem Prüfkopfträger (45) zum Einrasten desselben in bestimmten Winkelpositionen am bogenförmigen Pfad Mittel (61) zugeordnet sind.

7. Vorrichtung nach einem der Ansprüche 1 bis 6, dadurch gekennzeichnet, daß sie einen Prüfbehälter (10) mit einem in einer Seitenwand desselben angeordneten Spannzangeneinsatz (14) zum axialen Aufnehmen eines stabähnlichen Objekts (R) und Mittel (17) zum starren Haltern der Positionierschlitten-Anordnung (18 - 33) oberhalb des Prüfbehälters aufweist, so daß das längliche Halteteil (36) in den Behälter ragt.

8. Vorrichtung nach Anspruch 7, dadurch gekennzeichnet, daß der Spannzangeneinsatz (14) derart drehbar ist, daß ein darin aufgenommenes stabähnliches Objekt (R) um seine Längsachse gedreht wird.

9. Vorrichtung nach einem der Ansprüche 1 bis 8, dadurch gekennzeichnet, daß die Schlittenanordnung (18 - 33) einen ersten Schlitten (19), welcher zum Bewegen desselben entlang einer ersten der drei Achsen gehaltert ist, einen zweiten, am ersten Schlitten (19) befestigten Schlitten (22) zum Verstellen in einer zweiten der drei Achsen, welche senkrecht zur ersten Achse und in einer dazu senkrechten Ebene verläuft, und einen dritten am zweiten Schlitten (22) befestigten Schlitten (31) zum Verstellen entlang der dritten Achse aufweist, welche senkrecht zu den die erste bzw. zweite Achse beinhaltenden Ebenen verläuft, wobei das längliche Halteteil (36) am dritten Schlitten (31) befestigt ist.

FIG. 1

FIG. 2

FIG. 3

FIG. 4